# EUROPEAN PATENT SPECIFICATION

(11) **EP 3 190 743 B1**
(45) Date of publication and mention of the grant of the patent: **14.08.2019**
(21) Application number: 15866349.2
(22) Date of filing: 03.12.2015
(51) Int. Cl.: H04L 9/32

(54) **PACKET PROCESSING METHOD, NETWORK SERVER AND VIRTUAL PRIVATE NETWORK SYSTEM**
PAKETVERARBEITUNGSVERFAHREN, NETZWERKSERVER UND VIRTUELLES PRIVATES NETZWERKSYSTEM
PROCÉDÉ DE TRAITEMENT DE PAQUETS, SERVEUR DE RÉSEAU ET SYSTÈME DE RÉSEAU PRIVÉ VIRTUEL

(30) Priority: 05.12.2014 CN 201410735369
(43) Date of publication of application: 12.07.2017
(73) Proprietor: Huawei Technologies Co. Ltd., Shenzhen, Guangdong 518129 (CN)
(72) Inventor: LI, Jun, Shenzhen Guangdong 518129 (CN)
(74) Representative: Körber, Martin Hans
(86) International application number: PCT/CN2015/096303
(87) International publication number: WO 2016/086876

(56) References cited:
- EP-A2- 1 043 869
- WO-A1-2014/056511
- CN-A- 101 257 420
- CN-A- 101 304 387
- CN-A- 101 562 526
- CN-A- 101 867 476
- CN-A- 102 195 988
- CN-A- 104 468 313
- US-A1- 2006 072 572
- US-A1- 2011 296 186

## Description

### TECHNICAL FIELD

The present invention relates to the communications field, and in particular, to a packet processing method, a network server, and a virtual private network system.

### BACKGROUND

A VPDN (virtual private dial up network) refers to a virtual private network implemented by accessing a private network by using a dialing function of a public network, so that remote users of an enterprise can access an intranet of the enterprise by using the public network.

In the prior art, user equipment establishes a session with an LNS (Layer 2 Tunneling Protocol Network Server) by using an LAC (Layer 2 Tunneling Protocol Access Concentrator), so as to access a virtual private network. If a user gets online repeatedly or fails in online authentication consecutively for many times, the LAC confirms that the user is an unauthorized user and sets the user in a suppressed state. The LAC directly rejects an access request of the user, and restores services for the server after the suppression lasts a period of time. However, the LAC is an access device of a local ISP (Internet Service Provider). LAC devices of different service providers have different suppression mechanisms for users, while a quantity of sessions or tunnels that can be established on an LNS is fixed, and if there are excessively many unauthorized users establishing sessions on the LNS, authorized users cannot get online. Therefore, a virtual private network system cannot suppress unauthorized users effectively.

US 2011/0296186 A1 discloses a system and method for providing authenticated access to an initiating terminal in relation to the services provided by a terminating terminal via a communications network are disclosed. In one aspect, a global server comprises a communications module, which receives and processes a key exchange initiation message from the initiating terminal so as to establish an encrypted communications channel with the terminating terminal. The communications module, responsive to a received key exchange initiation message, performs an encrypted communication establishment process in respect of the received key exchange initiation message. The encrypted communication establishment process comprises authenticating the initiating terminal, and in the event that the initiating terminal is successfully authenticated, transmitting keying data corresponding to the received key exchange initiation message to the terminating terminal. The keying data is identified on the basis of data associated with the initiating terminal.

### SUMMARY

The invention is defined by the independent claims. Advantageous embodiments are subject to the dependent claims.

Embodiments of the present invention provide a packet processing method, a network server, and a virtual private network system, so as to resolve a problem that a virtual private network system cannot effectively suppress unauthorized users.

To achieve the foregoing objective, the following technical solutions are used in the embodiments of the present invention:
According to a first example, a virtual private network system includes a network server, an access device, and user equipment, where
the user equipment is configured to send a first packet to the access device, where the first packet includes an identifier of a first user, and the identifier of the first user is used to identify the first user;
the access device is configured to: receive the first packet sent by the user equipment, search an already stored second list for a suppressed state identifier of the first user according to the identifier of the first user, and send the first packet to the network server when the second list does not include the suppressed state identifier of the first user, where the suppressed state identifier of the first user is used to indicate not to provide services to the first user; and
the network server is configured to: receive the first packet sent by the access device, search an already stored first list for the suppressed state identifier of the first user according to the identifier of the first user, and discard the first packet when the first list includes the suppressed state identifier of the first user.

With reference to the first example, in a first possible implementation manner,
the network server is further configured to: record an occurrence time of a first fault of the first user, and accumulate a quantity of times of faults, where the quantity of times of faults is at least one of a quantity of times that the first user fails to get online on the network server or a quantity of times that the first user gets offline on the network server, or the quantity of times of faults is a sum of a quantity of times that the first user fails to get online on the network server and a quantity of times that the first user gets offline on the network server; store the suppressed state identifier of the first user in the first list when the quantity of times of faults of the first user within first duration is greater than or equal to a first threshold; and clear the quantity of times of faults of the first user after a time length, since the occurrence time of the first fault, of accumulating the quantity of times of faults by the network server reaches the first duration.

With reference to the first example or the first possible implementation manner of the first example, in a second possible implementation manner,
the network server is further configured to delete the suppressed state identifier of the first user from the first list after a time length for which the network server stores the suppressed state identifier of the first user in the first list reaches second duration.

With reference to the first example, in a third possible implementation manner,
the network server is further configured to send a second packet to the access device when the first list includes the suppressed state identifier of the first user, where the second packet includes the suppressed state identifier of the first user; and
the access device is further configured to: receive the second packet sent by the network server, record the suppressed state identifier of the first user in the second list, and stop providing services to the first user.

With reference to any one of the first example to the third possible implementation manner of the first example, in a fourth possible implementation manner,
the access device is further configured to discard the first packet when the second list includes the suppressed state identifier of the first user.

According to a second example, a network server applied to a virtual private network system includes:
a receiving unit, configured to receive a first packet sent by an access device, where the first packet includes an identifier of a first user, and the identifier of the first user is used to identify the first user;
a searching unit, configured to search an already stored first list for a suppressed state identifier of the first user according to the identifier of the first user received by the receiving unit;
a suppression unit, configured to discard the first packet when the first list searched by the searching unit includes the suppressed state identifier of the first user, where the suppressed state identifier of the first user is used to indicate not to provide services to the first user; and
a sending unit, configured to send a second packet to the access device when the first list includes the suppressed state identifier of the first user, where the second packet includes the suppressed state identifier of the first user, so that the access device stops providing services to the first user according to the suppressed state identifier of the first user.

With reference to the second example, in a first possible implementation manner,
the suppression unit is further configured to: record an occurrence time of a first fault of the first user, and accumulate a quantity of times of faults, where the quantity of times of faults is at least one of a quantity of times that the first user fails to get online on the network server or a quantity of times that the first user gets offline on the network server, or the quantity of times of faults is a sum of a quantity of times that the first user fails to get online on the network server and a quantity of times that the first user gets offline on the network server; store the suppressed state identifier of the first user in the first list when the quantity of times of faults of the first user within first duration is greater than or equal to a first threshold; and clear the quantity of times of faults of the first user after a time length, since the occurrence time of the first fault, of accumulating the quantity of times of faults by the network server reaches the first duration.

With reference to the second example or the first possible implementation manner of the second example, in a second possible implementation manner,
the suppression unit is further configured to delete the suppressed state identifier of the first user from the first list after a time length for which the network server stores the suppressed state identifier of the first user in the first list reaches second duration.

According to a third example, a packet processing method applied to a virtual private network system includes:
receiving, by a network server, a first packet sent by an access device, where the first packet includes an identifier of a first user, and the identifier of the first user is used to identify the first user;
searching, by the network server, an already stored first list for a suppressed state identifier of the first user according to the identifier of the first user;
discarding, by the network server, the first packet when the first list includes the suppressed state identifier of the first user, where the suppressed state identifier of the first user is used to indicate not to provide services to the first user; and
sending, by the network server, a second packet to the access device when the first list includes the suppressed state identifier of the first user, where the second packet includes the suppressed state identifier of the first user, so that the access device stops providing services to the first user according to the suppressed state identifier of the first user.

With reference to the third example, in a first possible implementation manner, the method further includes:
recording, by the network server, an occurrence time of a first fault of the first user, and accumulating a quantity of times of faults, where the quantity of times of faults is at least one of a quantity of times that the first user fails to get online on the network server or a quantity of times that the first user gets offline on the network server, or the quantity of times of faults is a sum of a quantity of times that the first user fails to get online on the network server and a quantity of times that the first user gets offline on the network server;
storing, by the network server, the suppressed state identifier of the first user in the first list when the quantity of times of faults of the first user within first duration is greater than or equal to a first threshold; and
clearing the quantity of times of faults of the first user after a time length, since the occurrence time of the first fault, of accumulating the quantity of times of faults by the network server reaches the first duration.

With reference to the third example or the first possible implementation manner of the third example, in a second possible implementation manner, the method further includes:
deleting, by the network server, the suppressed state identifier of the first user from the first list after a time length for which the network server stores the suppressed state identifier of the first user in the first list reaches second duration.

According to a packet processing method, a network server, and a virtual private network system in the embodiments of the present invention, a network server receives a first packet sent by an access device, searches an already stored first list for a state identifier of a first user according to an identifier of the first user, and discards the first packet if the state identifier is found. The network server participates in determining whether to suppress a user, so as to suppress unauthorized users efficiently and quickly, thereby resolving a problem in the prior art that a virtual private network system cannot effectively suppress unauthorized users.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of a virtual private network system according to an embodiment of the present invention;
FIG. 2 is a schematic structural diagram of a network server according to an embodiment of the present invention;
FIG. 3 is a schematic structural diagram of a network server according to another embodiment of the present invention;
FIG. 4 is a schematic flowchart of a packet processing method according to an embodiment of the present invention; and
FIG. 5 is a schematic diagram of information interaction of a packet processing method according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

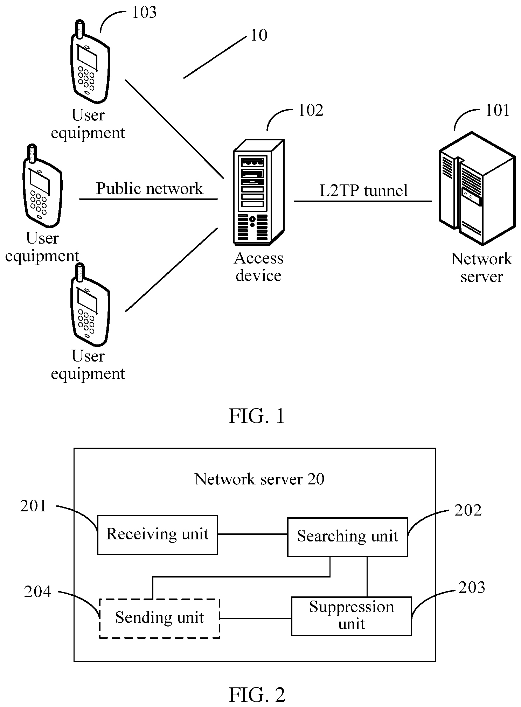

An embodiment of the present invention provides a virtual private network system. Referring to FIG. 1, the virtual private network system 10 includes a network server 101, an access device 102, and user equipment 103. Optionally, the network server 101 may be a layer 2 tunneling protocol network server LNS, and the access device 102 may be a layer 2 tunneling protocol access concentrator LAC. Certainly, this is only an example for description, and does not represent that the present invention is limited thereto.

Optionally, in the virtual private network system shown in FIG. 1, the user equipment 103 establishes a connection to an LAC by using a public network, and the public network may be a PSTN (Public Switched Telephone Network), an ISDN (Integrated Services Digital Network), or the like. After the user equipment 103 establishes the connection to the LAC, the user equipment 103 may communicate with an LNS by using an L2TP tunnel established between the LAC and the LNS according to an L2TP (Layer 2 Tunneling Protocol).

In this embodiment of the present invention, the user equipment 103 is configured to send a first packet to the access device 102, where the first packet includes an identifier of a first user, and the identifier of the first user is used to identify the first user.

The access device 102 is configured to: receive the first packet sent by the user equipment 103, search an already stored second list for a suppressed state identifier of the first user according to the identifier of the first user, and send the first packet to the network server 101 when the second list does not include the suppressed state identifier of the first user, where the suppressed state identifier of the first user is used to indicate not to provide services to the first user.

The network server 101 is configured to: receive the first packet sent by the access device 102, search an already stored first list for the suppressed state identifier of the first user according to the identifier of the first user, and discard the first packet when the first list includes the suppressed state identifier of the first user.

Optionally, the network server 101 is further configured to: record an occurrence time of a first fault of the first user, and accumulate a quantity of times of faults, where the quantity of times of faults is at least one of a quantity of times that the first user fails to get online on the network server or a quantity of times that the first user gets offline on the network server, and certainly, the quantity of times of faults may also be a sum of a quantity of times that the first user fails to get online on the network server and a quantity of times that the first user gets offline on the network server. The network server stores the suppressed state identifier of the first user in the first list when the quantity of times of faults of the first user within first duration is greater than or equal to a first threshold. The network server empties the quantity of times of faults of the first user after a time length, since the occurrence time of the first fault, of accumulating the quantity of times of faults by the network server reaches the first duration.

Optionally, the network server 101 is further configured to delete the suppressed state identifier of the first user from the first list after a time length for which the network server stores the suppressed state identifier of the first user in the first list reaches second duration.

Optionally, the network server 101 is further configured to send a second packet to the access device 102 when the first list includes the suppressed state identifier of the first user, where the second packet includes the suppressed state identifier of the first user.

The access device 102 is further configured to: receive the second packet sent by the network server 101, record the suppressed state identifier of the first user in the second list, and stop providing services to the first user.

Optionally, the access device 102 is further configured to discard the first packet when the second list includes the suppressed state identifier of the first user.

According to the virtual private network system provided in this embodiment of the present invention, the user equipment sends a first packet to the access device. The access device searches an already stored second list for a suppressed state identifier of a first user according to an identifier of the first user after receiving the first packet sent by the user equipment, and sends the first packet to the network server when the second list does not include the suppressed state identifier of the first user. The network server searches an already stored first list for the state identifier of the first user according to the identifier of the first user, and discards the first packet if the state identifier is found. The network server and the access device jointly determine whether to suppress a user, so as to suppress unauthorized users efficiently and quickly, thereby resolving a problem in the prior art that a virtual private network system cannot effectively suppress unauthorized users.

An embodiment of the present invention provides a network server on the basis of the embodiment corresponding to FIG. 1. Optionally, the network server may be an LNS. Referring to FIG. 2, the network server 20 includes a receiving unit 201, a searching unit 202, and a suppression unit 203.

The receiving unit 201 is configured to receive a first packet sent by an access device, where the first packet includes an identifier of a first user, and the identifier of the first user is used to identify the first user.

The searching unit 202 is configured to search an already stored first list for a suppressed state identifier of the first user according to the identifier of the first user received by the receiving unit 201.

The suppression unit 203 is configured to discard the first packet when the first list searched by the searching unit 202 includes the suppressed state identifier of the first user, where the suppressed state identifier of the first user is used to indicate not to provide services to the first user.

Optionally, the network server 203 is further configured to: record an occurrence time of a first fault of the first user, and accumulate a quantity of times of faults, where the quantity of times of faults is at least one of a quantity of times that the first user fails to get online on the network server or a quantity of times that the first user gets offline on the network server, and certainly, the quantity of times of faults may also be a sum of a quantity of times that the first user fails to get online on the network server and a quantity of times that the first user gets offline on the network server. The network server stores the suppressed state identifier of the first user in the first list when the quantity of times of faults of the first user within first duration is greater than or equal to a first threshold. The network server clears the quantity of times of faults of the first user after a time length, since the occurrence time of the first fault, of accumulating the quantity of times of faults by the network server reaches the first duration.

The suppression unit 203 is further configured to delete the suppressed state identifier of the first user from the first list after a time length for which the network server stores the suppressed state identifier of the first user in the first list reaches second duration.

Optionally, the network server 20 further includes a sending unit 204, configured to send a second packet to the access device when the first list includes the suppressed state identifier of the first user, where the second packet includes the suppressed state identifier of the first user, so that the access device stops providing services to the first user according to the suppressed state identifier of the first user.

The network server provided in this embodiment of the present invention receives a first packet sent by an access device, searches an already stored first list for a state identifier of a first user according to an identifier of the first user, and discards the first packet if the state identifier is found. The network server participates in determining whether to suppress a user, so as to suppress unauthorized users efficiently and quickly, thereby resolving a problem in the prior art that a virtual private network system cannot effectively suppress unauthorized users.

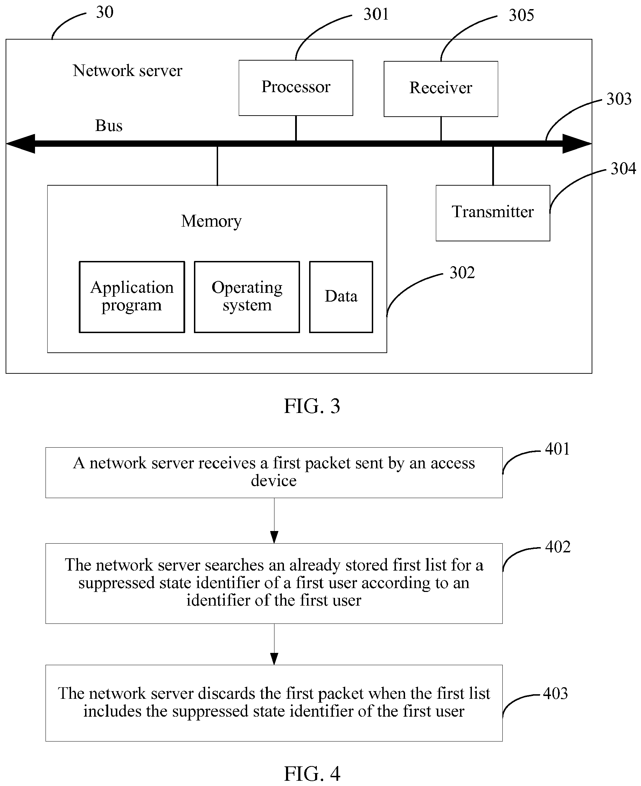

Another embodiment of the present invention provides a network server 30 on the basis of the embodiment corresponding to FIG. 1. Referring to FIG. 3, the network server 30 includes: at least one processor 301, a memory 302, a bus 303, a transmitter 304, and a receiver 305. The at least one processor 301, the memory 302, the transmitter 304, and the receiver 305 are connected and complete communication with one another by using the bus 303.

The bus 303 may be an ISA (Industry Standard Architecture) bus, a PCI (peripheral component interconnect) bus, an EISA (Extended Industry Standard Architecture) bus, or the like. The bus 303 may be one or more of an address bus, a data bus, or a control bus. For ease of representation, the bus in FIG. 3 is represented by using only one bold line, but it does not indicate that there is only one bus or only one type of bus.

The memory 302 is configured to execute application program code of the solutions of the present invention, and application program code for executing a solution of this embodiment of the present invention is stored in the memory and is controlled and executed by the processor 301.

The memory may be a read-only memory ROM or a static storage device of another type that can store static information and an instruction; a random access memory RAM or a dynamic storage device of another type that can store information and an instruction; or an electrically erasable programmable read-only memory EEPROM, a compact disc read-only memory CD-ROM or other optical disk storage, optical disc storage (including a compact disc, a laser disc, an optical disc, a digital versatile disc, a Blu-ray disc, or the like), a disk storage medium or other disk storage, or any other medium that can be used to carry or store expected program code in a command or data structure form and that can be accessed by a computer, but is not limited thereto. These memories are connected to the processor by using the bus.

The processor 301 may be a central processing unit (Central Processing Unit, CPU for short), or an application specific integrated circuit (Application Specific Integrated Circuit, ASIC for short), or may be configured as one or more integrated circuits for implementing this embodiment of the present invention.

The processor 301 is configured to call the program code in the memory 302, to execute operations of the searching unit and the suppression unit in the device embodiment corresponding to FIG. 2. For specific descriptions, refer to the device embodiment corresponding to FIG. 2, and details are not described herein again.

The network server provided in this embodiment of the present invention receives a first packet sent by an access device, searches an already stored first list for a state identifier of a first user according to an identifier of the first user, and discards the first packet if the state identifier is found. The network server participates in determining whether to suppress a user, so as to suppress unauthorized users efficiently and quickly, thereby resolving a problem in the prior art that a virtual private network system cannot effectively suppress unauthorized users.

An embodiment of the present invention provides a packet processing method on the basis of the embodiments corresponding to FIG. 1, FIG. 2, and FIG. 3. The method is applied to the network servers described in the embodiments corresponding to FIG. 1, FIG. 2, and FIG. 3. Referring to FIG. 4, the packet processing method provided in this embodiment includes:
401: A network server receives a first packet sent by an access device.
   The first packet includes an identifier of a first user, where the identifier of the first user is used to identify the first user. Optionally, the identifier of the first user may be a calling number (Calling Number) of the first user. The first packet may be an online packet of the first user, including request information of the first user for accessing a virtual private network, or may be a data packet sent by the first user.
402: The network server searches an already stored first list for a suppressed state identifier of the first user according to an identifier of the first user.

The suppressed state identifier of the first user is used to indicate not to provide services to the first user.

Optionally, the network server records an occurrence time of a first fault of the first user, and accumulates a quantity of times of faults, where the quantity of times of faults is at least one of a quantity of times that the first user fails to get online on the network server or a quantity of times that the first user gets offline on the network server, and certainly the quantity of times of faults may also be a sum of a quantity of times that the first user fails to get online on the network server and a quantity of times that the first user gets offline on the network server; the network server stores the suppressed state identifier of the first user in the first list when the quantity of times of faults of the first user within first duration is greater than or equal to a first threshold; and clears the quantity of times of faults of the first user after a time length, since the occurrence time of the first fault, of accumulating the quantity of times of faults by the network server reaches the first duration.

The first threshold may be set according to a load condition of an access user on a network side, and a specific value of the first threshold is not limited in the present invention.

Certainly, statistics are collected herein merely by using a failure in getting online or that a user gets offline as a fault, and other behaviors of a user may also be used as a fault for statistics collection, which is not limited in this embodiment.

403: The network server discards the first packet when the first list includes the suppressed state identifier of the first user.

Optionally, with reference to 402, if the first list includes the suppressed state identifier of the first user, it indicates that the quantity of times of faults of the first user has exceeded the first threshold, the first user is considered as an unauthorized user, and services are stopped being provided to the first user.

In addition, optionally, the network service deletes the suppressed state identifier of the first user from the first list after a time length for which the network server stores the suppressed state identifier of the first user in the first list reaches second duration.

According to the packet processing method provided in this embodiment of the present invention, a network server receives a first packet sent by an access device, searches an already stored first list for a state identifier of a first user according to an identifier of the first user, and discards the first packet if the state identifier is found. The network server participates in determining whether to suppress a user, so as to suppress unauthorized users efficiently and quickly, thereby resolving a problem in the prior art that a virtual private network system cannot effectively suppress unauthorized users.

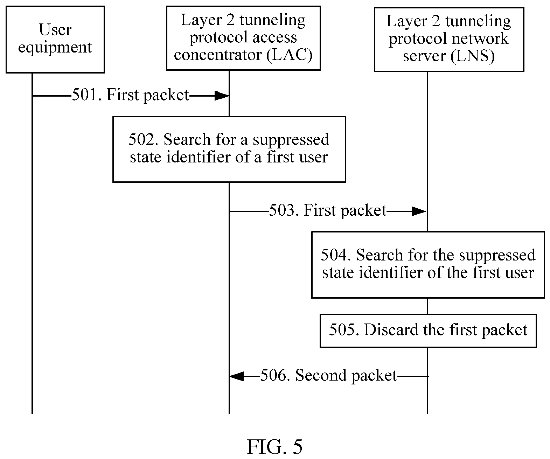

Another embodiment of the present invention provides a packet processing method on the basis of the embodiment corresponding to FIG. 4. The method is applied to the virtual private network system described in the embodiment corresponding to FIG. 1. Optionally, this embodiment is described by using an example in which a network device is an LNS and an access device is an LAC. Certainly, this embodiment merely provides descriptions with an example, which does not represent that the present invention is limited thereto. Referring to FIG. 5, the method includes:
501: User equipment sends a first packet to an access device.
   The first packet includes an identifier of a first user, where the identifier is used to identify the first user.
   Optionally, the first packet may be an online packet of the first user or a data packet of the first user.
502: The access device searches an already stored second list for a suppressed state identifier of the first user according to an identifier of the first user.
   The suppressed state identifier of the first user is used to indicate not to provide services to the first user.
   Optionally, by searching for the suppressed state identifier of the first user in the second list, the LAC determines whether the first user is already locally suppressed, and if the second list includes the suppressed state identifier of the first user, the LAC may discard the first packet, and if the suppressed state identifier of the first user is not found, continue to execute 503.
503: The access device sends the first packet to a network server when the second list does not include the suppressed state identifier of the first user.
   If the local LAC does not suppress the first user, the first packet may be sent to the LNS, and the LNS further determines whether the first user needs to be suppressed. In this way, the LNS on a network side also participates in determining whether to suppress the user, so that the network side in a virtual private network can suppress users efficiently and quickly.
504: The network server searches an already stored first list for the suppressed state identifier of the first user according to the identifier of the first user.
   Optionally, the network server records an occurrence time of a first fault of the first user, and accumulates a quantity of times of faults, where the quantity of times of faults is at least one of a quantity of times that the first user fails to get online on the network server or a quantity of times that the first user gets offline on the network server, and certainly, the quantity of times of faults may also be a sum of a quantity of times that the first user fails to get online on the network server and a quantity of times that the first user gets offline on the network server; the network server stores the suppressed state identifier of the first user in the first list when the quantity of times of faults of the first user within first duration is greater than or equal to a first threshold; and clears the quantity of times of faults of the first user after a time length, since the occurrence time of the first fault, of accumulating the quantity of times of faults by the network server reaches the first duration.
   With reference to 502, the access device may also record the quantity of times of faults of the user in the foregoing manner, and details are not described again in this embodiment.
505: The network server discards the first packet when the first list includes the suppressed state identifier of the first user.
   Optionally, the network service deletes the suppressed state identifier of the first user from the first list after a time length for which the network server stores the suppressed state identifier of the first user in the first list reaches second duration.
506: Send a second packet to the access device.

The second packet includes the suppressed state identifier of the first user.

Optionally, the LNS receives the first packet, which proves that the local LAC does not suppress the first user, and the LNS informs the LAC to suppress the first user by sending the second packet including the suppressed state identifier of the first user to the LAC. If receiving a packet of the first user again, the LAC may directly discard the packet of the first user, thereby avoiding that excessive packet interaction between the LAC and the LNS occupies excessive resources.

According to the packet processing method provided in this embodiment of the present invention, user equipment sends a first packet to an access device. The access device searches an already stored second list for a suppressed state identifier of a first user according to an identifier of the first user after receiving the first packet sent by the user equipment, and sends the first packet to a network server when the second list does not include the suppressed state identifier of the first user. The network server searches an already stored first list for the state identifier of the first user according to the identifier of the first user, and discards the first packet if the state identifier is found. The network server and the access device jointly determine whether to suppress a user, so as to suppress unauthorized users efficiently and quickly, thereby resolving a problem in the prior art that a virtual private network system cannot effectively suppress unauthorized users.

With descriptions of the foregoing embodiments, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. Examples of the computer-readable medium include but are not limited to: a RAM (Random Access Memory), a ROM (Read-Only Memory), an EEPROM (Electrically Erasable Programmable Read-Only Memory), a CD-ROM (Compact Disc Read-Only Memory) or other optical disc storage, a disk storage medium or other disk storage, or any other medium that can be used to carry or store expected program code in a command or data structure form and can be accessed by a computer. In addition, any connection may be appropriately defined as a computer-readable medium. For example, if software is transmitted from a website, a server or another remote source by using a coaxial cable, an optical fiber/cable, a twisted pair, a DSL (Digital Subscriber Line) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk and a disc used by the present invention includes a CD (Compact Disc), a laser disc, an optical disc, a DVD disc (Digital Versatile Disc), a floppy disk and a Blu-ray disc, where the disk generally copies data by a magnetic means, and the disc copies data optically by a laser means. The foregoing combination should also be included in the protection scope of the computer-readable medium.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A virtual private network system (10), comprising a network server (101), an access device (102), and user equipment (103), wherein
the user equipment (103) is configured to send a first packet to the access device (102), wherein the first packet comprises an identifier of a first user, and the identifier of the first user is used to identify the first user;
the access device (102) is configured to: receive the first packet sent by the user equipment (103), search an already stored second list for a suppressed state identifier of the first user according to the identifier of the first user, and send the first packet to the network server (101) when the second list does not comprise the suppressed state identifier of the first user, wherein the suppressed state identifier of the first user is used to indicate not to provide services to the first user; and
the network server (101) is configured to: receive the first packet sent by the access device (102), search an already stored first list for the suppressed state identifier of the first user according to the identifier of the first user, and discard the first packet when the first list comprises the suppressed state identifier of the first user, and
to send a second packet to the access device when the first list comprises the suppressed state identifier of the first user, wherein the second packet comprises the suppressed state identifier of the first user, so that the access device stops providing services to the first user according to the suppressed state identifier of the first user.

2. The network system (10) according to claim 1, wherein
the network server (101) is further configured to: record an occurrence time of a first fault of the first user, and accumulate a quantity of times of faults, wherein the quantity of times of faults is at least one of a quantity of times that the first user fails to get online on the network server (101) or a quantity of times that the first user gets offline on the network server (101), or the quantity of times of faults is a sum of a quantity of times that the first user fails to get online on the network server (101) and a quantity of times that the first user gets offline on the network server (101); store the suppressed state identifier of the first user in the first list when the quantity of times of faults of the first user within first duration is greater than or equal to a first threshold; and clear the quantity of times of faults of the first user after a time length, since the occurrence time of the first fault, of accumulating the quantity of times of faults by the network server (101) reaches the first duration.

3. The network system (10) according to claim 1 or 2, wherein
the network server (101) is further configured to delete the suppressed state identifier of the first user from the first list after a time length for which the network server (101) stores the suppressed state identifier of the first user in the first list reaches second duration.

4. The network system (10) according to claim 1, wherein
the network server (101) is further configured to send a second packet to the access device (102) when the first list comprises the suppressed state identifier of the first user, wherein the second packet comprises the suppressed state identifier of the first user; and
the access device (102) is further configured to: receive the second packet sent by the network server (101), record the suppressed state identifier of the first user in the second list, and stop providing services to the first user.

5. The network system (10) according to any one of claims 1 to 4, wherein
the access device (102) is further configured to discard the first packet when the second list comprises the suppressed state identifier of the first user.

6. A network server (20), applied to a virtual private network system, comprising:
a receiving unit (201), configured to receive a first packet sent by an access device, wherein the first packet comprises an identifier of a first user, and the identifier of the first user is used to identify the first user;
a searching unit (202), configured to search an already stored first list for a suppressed state identifier of the first user according to the identifier of the first user received by the receiving unit;
a suppression unit (203), configured to discard the first packet when the first list searched by the searching unit comprises the suppressed state identifier of the first user, wherein the suppressed state identifier of the first user is used to indicate not to provide services to the first user; and
a sending unit (204), configured to send a second packet to the access device when the first list comprises the suppressed state identifier of the first user, wherein the second packet comprises the suppressed state identifier of the first user, so that the access device stops providing services to the first user according to the suppressed state identifier of the first user.

7. The network server (20) according to claim 6, wherein
the suppression unit (203) is further configured to: record an occurrence time of a first fault of the first user, and accumulate a quantity of times of faults, wherein the quantity of times of faults is at least one of a quantity of times that the first user fails to get online on the network server or a quantity of times that the first user gets offline on the network server, or the quantity of times of faults is a sum of a quantity of times that the first user fails to get online on the network server and a quantity of times that the first user gets offline on the network server; store the suppressed state identifier of the first user in the first list when the quantity of times of faults of the first user within first duration is greater than or equal to a first threshold; and clear the quantity of times of faults of the first user after a time length, since the occurrence time of the first fault, of accumulating the quantity of times of faults by the network server reaches the first duration.

8. The network server (20) according to claim 6 or 7, wherein
the suppression unit (203) is further configured to delete the suppressed state identifier of the first user from the first list after a time length for which the network server stores the suppressed state identifier of the first user in the first list reaches second duration.

9. A packet processing method, applied to a virtual private network system, comprising:
receiving (401), by a network server, a first packet sent by an access device, wherein the first packet comprises an identifier of a first user, and the identifier of the first user is used to identify the first user;
searching (402), by the network server, an already stored first list for a suppressed state identifier of the first user according to the identifier of the first user;
discarding (403), by the network server, the first packet when the first list comprises the suppressed state identifier of the first user, wherein the suppressed state identifier of the first user is used to indicate not to provide services to the first user; and
sending, by the network server, a second packet to the access device when the first list comprises the suppressed state identifier of the first user, wherein the second packet comprises the suppressed state identifier of the first user, so that the access device stops providing services to the first user according to the suppressed state identifier of the first user.

10. The method according to claim 9, wherein the method further comprises:
recording, by the network server, an occurrence time of a first fault of the first user, and accumulating a quantity of times of faults, wherein the quantity of times of faults is at least one of a quantity of times that the first user fails to get online on the network server or a quantity of times that the first user gets offline on the network server, or the quantity of times of faults is a sum of a quantity of times that the first user fails to get online on the network server and a quantity of times that the first user gets offline on the network server;
storing, by the network server, the suppressed state identifier of the first user in the first list when the quantity of times of faults of the first user within first duration is greater than or equal to a first threshold; and
clearing the quantity of times of faults of the first user after a time length, since the occurrence time of the first fault, of accumulating the quantity of times of faults by the network server reaches the first duration.

11. The method according to claim 9, wherein the method further comprises:
deleting, by the network server, the suppressed state identifier of the first user from the first list after a time length for which the network server stores the suppressed state identifier of the first user in the first list reaches second duration.

## Patentansprüche

1. Virtuelles privates Netzwerksystem (10), einen Netzwerkserver (101), eine Zugangsvorrichtung (102) und Benutzergerät (103) umfassend, wobei das Benutzergerät (103) konfiguriert ist, ein erstes Paket an die Zugangsvorrichtung (102) zu senden, wobei das erste Paket eine Kennung eines ersten Benutzers umfasst und die Kennung des ersten Benutzers zum Identifizieren des ersten Benutzers verwendet wird;
die Zugangsvorrichtung (102) konfiguriert ist: das erste Paket, das von dem Benutzergerät (103) gesendet wurde, zu empfangen, eine bereits gespeicherte Liste nach einer unterdrückten Zustandskennung des ersten Benutzers gemäß der Kennung des ersten Benutzers zu durchsuchen, und das erste Paket an den Netzwerkserver (101) zu senden, wenn die zweite Liste die unterdrückte Zustandskennung des ersten Benutzers nicht umfasst, wobei die unterdrückte Zustandskennung des ersten Benutzers verwendet wird, um anzugeben, Dienste dem ersten Benutzer nicht bereitzustellen; und
der Netzwerkserver (101) konfiguriert ist: das erste Paket, das von der Zugangsvorrichtung (102) gesendet wurde, zu empfangen, eine bereits gespeicherte erste Liste nach der unterdrückten Zugangskennung des ersten Benutzers gemäß der Kennung des ersten Benutzers zu durchsuchen, und das erste Paket zu verwerfen, wenn die erste Liste die unterdrückte Zustandskennung des ersten Benutzers umfasst, und
ein zweites Paket an die Zugangsvorrichtung zu senden, wenn die erste Liste die unterdrückte Zustandskennung des ersten Benutzers umfasst, wobei das zweite Paket die unterdrückte Zustandskennung des ersten Benutzers umfasst, so dass die Zugangsvorrichtung Bereitstellen von Diensten an den ersten Benutzer gemäß der unterdrückten Zustandskennung des ersten Benutzers stoppt.

2. Netzwerksystem (10) nach Anspruch 1, wobei
der Netzwerkserver (101) ferner konfiguriert ist: eine Auftretenszeit eines ersten Fehlers des ersten Benutzers aufzuzeichnen und eine Quantität der Fehlermale zu akkumulieren, wobei die Quantität der Fehlermale mindestens eines ist von einer Quantität der Male, die der erste Benutzer dabei scheitert, auf dem Netzwerkserver (101) online zu gehen, oder eine Quantität der Male, die der erste Benutzer auf dem Netzwerkserver (101) offline geht, oder die Quantität der Male von Fehlern eine Summe einer Quantität der Male ist, die der erste Benutzer dabei scheitert, auf dem Netzwerkserver (101) online zu gehen, und einer Quantität von Malen, die der erste Benutzer auf dem Netzwerkserver (101) offline geht; die unterdrückte Zustandskennung des ersten Benutzers in der ersten Liste zu speichern, wenn die Quantität der Fehlermale des ersten Benutzers innerhalb einer ersten Zeitdauer größer oder gleich einem ersten Schwellenwert ist; und die Quantität der Fehlermale des ersten Benutzers nach einer Zeitlänge seit der Auftretenszeit des ersten Fehlers des Akkumulierens der Quantität von Fehlermalen durch den Netzwerkserver (101) die erste Zeitdauer erreicht zu löschen.

3. Netzwerksystem (10) nach Anspruch 1 oder 2, wobei
der Netzwerkserver (101) ferner konfiguriert ist, die unterdrückte Zustandskennung des ersten Benutzers aus der ersten Liste nach einer Zeitlänge zu löschen, für die der Netzwerkserver (101) die unterdrückte Zustandskennung des ersten Benutzers in der ersten Liste speichert, eine zweite Zeitlänge erreicht.

4. Netzwerksystem (10) nach Anspruch 1, wobei
der Netzwerkserver (101) ferner konfiguriert ist, ein zweites Paket an die Zugangsvorrichtung (102) zu senden, wenn die erste Liste die unterdrückte Zustandskennung des ersten Benutzers umfasst, wobei das zweite Paket die unterdrückte Zustandskennung des ersten Benutzers umfasst; und
die Zugangsvorrichtung (102) ferner konfiguriert ist: das zweite Paket, das von dem Netzwerkserver (101) gesendet wurde, zu empfangen, die unterdrückte Zustandskennung des ersten Benutzers in der zweiten Liste aufzuzeichnen und Bereitstellen von Diensten an den ersten Benutzer zu stoppen.

5. Netzwerksystem (10) nach einem der Ansprüche 1 bis 4, wobei die Zugangsvorrichtung (102) ferner konfiguriert ist, das erste Paket zu verwerfen, wenn die zweite Liste die unterdrückte Zustandskennung des ersten Benutzers umfasst.

6. Netzwerkserver (20), auf ein virtuelles privates Netzwerksystem angewendet, umfassend:
eine Empfangseinheit (201), die konfiguriert ist, ein erstes Paket zu empfangen, das von einer Zugangsvorrichtung gesendet wurde, wobei das erste Paket eine Kennung eines ersten Benutzers umfasst, und die Kennung des ersten Benutzers verwendet wird, um den ersten Benutzer zu identifizieren;
eine Sucheinheit (202), die konfiguriert ist, eine bereits gespeicherte erste Liste für eine unterdrückte Zustandskennung des ersten Benutzers gemäß der Kennung des ersten Benutzers, die von der Empfangseinheit empfangen wurde, zu durchsuchen;
eine Unterdrückungseinheit (203), die konfiguriert ist, das erste Paket zu verwerfen, wenn die erste Liste, die von der Sucheinheit durchsucht wurde, die unterdrückte Zustandskennung des ersten Benutzers umfasst, wobei die unterdrückte Zustandskennung des ersten Benutzers verwendet wird, um anzugeben, dem ersten Benutzer Dienste nicht bereitzustellen; und
eine Sendeeinheit (204), die konfiguriert ist, ein zweites Paket an die Zugangsvorrichtung zu senden, wenn die erste Liste die unterdrückte Zugangskennung des ersten Benutzers umfasst, wobei das zweite Paket die unterdrückte Zustandskennung des ersten Benutzers umfasst, so dass die Zugangsvorrichtung Bereitstellen von Diensten an den ersten Benutzer gemäß der unterdrückten Zustandskennung des ersten Benutzers stoppt.

7. Netzwerksystem (20) nach Anspruch 6, wobei
die Unterdrückungseinheit (203) ferner konfiguriert ist: eine Auftretenszeit eines ersten Fehlers des ersten Benutzers aufzuzeichnen und eine Quantität der Fehlermale zu akkumulieren, wobei die Quantität der Fehlermale mindestens eines ist von einer Quantität der Male, die der erste Benutzer dabei scheitert, auf dem Netzwerkserver online zu gehen, oder eine Quantität der Male, die der erste Benutzer auf dem Netzwerkserver offline geht, oder die Quantität der Fehlermale eine Summe einer Quantität von Malen ist, die der erste Benutzer dabei scheitert, auf dem Netzwerkserver online zu gehen, und eine Quantität von Malen, die der erste Benutzer auf dem Netzwerkserver offline geht; die unterdrückte Zustandskennung des ersten Benutzers in der ersten Liste zu speichern, wenn die Quantität der Fehlermale des ersten Benutzers innerhalb einer ersten Zeitdauer größer oder gleich einem ersten Schwellenwert ist; und die Quantität der Fehlermale des ersten Benutzers nach einer Zeitlänge seit der Auftretenszeit des ersten Fehlers des Akkumulierens der Quantität der Fehlermale durch den Netzwerkserver die erste Zeitdauer erreicht zu löschen.

8. Netzwerkserver (20) nach Anspruch 6 oder 7, wobei
die Unterdrückungseinheit (203) ferner konfiguriert ist, die unterdrückte Zustandskennung des ersten Benutzers aus der ersten Liste nach einer Zeitlänge zu löschen, für die der Netzwerkserver die unterdrückte Zustandskennung des ersten Benutzers in der ersten Liste speichert, eine zweite Zeitlänge erreicht.

9. Paketverarbeitungsverfahren, auf ein virtuelles privates Netzwerksystem angewendet, umfassend: Empfangen (401), durch einen Netzwerkserver, eines ersten Pakets, das von einer Zugangsvorrichtung gesendet wurde, wobei das erste Paket eine Kennung eines ersten Benutzers umfasst, und die Kennung des ersten Benutzers verwendet wird, den ersten Benutzer zu identifizieren;
Durchsuchen (402), durch den Netzwerkserver, einer bereits gespeicherten ersten Liste nach einer unterdrückten Zustandskennung des ersten Benutzers gemäß der Kennung des ersten Benutzers;
Verwerfen (403), durch den Netzwerkserver, des ersten Pakets, wenn die erste Liste die unterdrückte Zustandskennung des ersten Benutzers umfasst, wobei die unterdrückte Zustandskennung des ersten Benutzers verwendet wird, um anzugeben, dass dem ersten Benutzer Dienste nicht bereitgestellt werden; und
Senden, durch den Netzwerkserver, eines zweiten Pakets an die Zugangsvorrichtung, wenn die erste Liste die unterdrückte Zugangskennung des ersten Benutzers umfasst, wobei das zweite Paket die unterdrückte Zustandskennung des ersten Benutzers umfasst, so dass die Zugangsvorrichtung Bereitstellen von Diensten an den ersten Benutzer gemäß der unterdrückten Zustandskennung des ersten Benutzers stoppt.

10. Verfahren nach Anspruch 9, wobei das Verfahren ferner umfasst:
Aufzeichnen, durch den Netzwerkserver, einer Auftretenszeit eines ersten Fehlers des ersten Benutzers, und Akkumulieren einer Quantität von Fehlermalen, wobei die Quantitäten von Fehlermalen mindestens eines ist von einer Quantität von Malen, die der erste Benutzer scheitert, auf dem Netzwerkserver online zu gehen, oder eine Quantität von Malen, die der erste Benutzer auf dem Netzwerkserver offline geht, oder die Quantität von Fehlermalen eine Summe einer Quantität von Malen ist, die der erste Benutzer scheitert, auf dem Netzwerkserver online zu gehen, und eine Quantität von Malen, die der erste Benutzer auf dem Netzwerkserver offline geht; Speichern, durch den Netzwerkserver, der unterdrückten Zustandskennung des ersten Benutzers in der ersten Liste, wenn die Quantität der Male von Fehlern des ersten Benutzers innerhalb einer ersten Zeitdauer größer oder gleich einem ersten Schwellenwert ist; und
Löschen der Quantität von Fehlermalen des ersten Benutzers nach einer Zeitlänge seit der Auftretenszeit des ersten Fehlers des Akkumulierens der Quantität von Fehlermalen durch den Netzwerkserver die erste Zeitdauer erreicht.

11. Verfahren nach Anspruch 9, wobei das Verfahren ferner umfasst:
Löschen, durch den Netzwerkserver, der unterdrückten Zustandskennung des ersten Benutzers aus der ersten Liste nach einer Zeitlänge, für die der Netzwerkserver die unterdrückte Zustandskennung des ersten Benutzers in der ersten Liste speichert, eine zweite Zeitlänge erreicht.

## Revendications

1. Système de réseau privé virtuel (10), comprenant un serveur du réseau (101), un dispositif d'accès (102) et un équipement d'utilisateur (103), dans lequel l'équipement d'utilisateur (103) est configuré pour envoyer un premier paquet au dispositif d'accès (102), dans lequel le premier paquet comprend un identifiant d'un premier utilisateur, et l'identifiant du premier utilisateur est utilisé pour identifier le premier utilisateur ;
le dispositif d'accès (102) est configuré pour : recevoir le premier paquet envoyé par l'équipement d'utilisateur (103), rechercher dans une seconde liste déjà stockée un identifiant d'état supprimé du premier utilisateur en fonction de l'identifiant du premier utilisateur, et envoyer le premier paquet au serveur du réseau (101) lorsque la seconde liste ne comprend pas l'identifiant d'état supprimé du premier utilisateur, dans lequel l'identifiant d'état supprimé du premier utilisateur est utilisé pour indiquer de ne pas fournir de services au premier utilisateur ; et
le serveur du réseau (101) est configuré pour : recevoir le premier paquet envoyé par le dispositif d'accès (102), rechercher dans une première liste déjà stockée l'identifiant d'état supprimé du premier utilisateur en fonction de l'identifiant du premier utilisateur, et ignorer le premier paquet lorsque la première liste comprend l'identifiant d'état supprimé du premier utilisateur et
envoyer un second paquet au dispositif d'accès lorsque la première liste comprend l'identifiant d'état supprimé du premier utilisateur, dans lequel le second paquet comprend l'identifiant d'état supprimé du premier utilisateur, de sorte que le dispositif d'accès cesse de fournir des services au premier utilisateur en fonction de l'identifiant d'état supprimé du premier utilisateur.

2. Système de réseau (10) selon la revendication 1, dans lequel
le serveur du réseau (101) est en outre configuré pour : enregistrer une heure d'apparition d'une première faute du premier utilisateur et accumuler un nombre d'apparition de fautes, dans lequel le nombre d'apparitions de fautes est au moins un parmi un nombre de fois où le premier utilisateur ne parvient pas à se connecter au serveur du réseau (101) et le nombre de fois où le premier utilisateur s'est déconnecté du serveur du réseau (101), ou le nombre d'apparitions de fautes est une somme d'un nombre de fois où le premier utilisateur ne parvient pas à se connecter au serveur du réseau (101) et d'un nombre de fois où le premier utilisateur s'est déconnecté du serveur du réseau (101) ; stocker l'identifiant d'état supprimé du premier utilisateur dans la première liste lorsque le nombre d'apparitions de fautes du premier utilisateur pendant la première durée est supérieur ou égal à un premier seuil ; et effacer le nombre d'apparitions de fautes du premier utilisateur après qu'un certain laps de temps, à partir du moment de l'apparition de la première faute, d'accumulation du nombre d'apparitions de fautes par le serveur du réseau (101) atteint la première durée.

3. Système de réseau (10) selon la revendication 1 ou 2, dans lequel
le serveur du réseau (101) est en outre configuré pour supprimer l'identifiant d'état supprimé du premier utilisateur de la première liste après qu'un certain laps de temps pendant laquelle le serveur du réseau (101) stocke l'identifiant d'état supprimé du premier utilisateur dans la première liste atteint une seconde durée.

4. Système de réseau (10) selon la revendication 1, dans lequel
le serveur du réseau (101) est en outre configuré pour envoyer un second paquet au dispositif d'accès (102) lorsque la première liste comprend l'identifiant d'état supprimé du premier utilisateur, dans lequel le second paquet comprend l'identifiant d'état supprimé du premier utilisateur ; et
le dispositif d'accès (102) est en outre configuré pour : recevoir le second paquet envoyé par le serveur du réseau (101), enregistrer l'identifiant d'état supprimé du premier utilisateur dans la seconde liste, et cesser de fournir des services au premier utilisateur.

5. Système de réseau (10) selon l'une quelconque des revendications 1 à 4, dans lequel
le dispositif d'accès (102) est en outre configuré pour rejeter le premier paquet lorsque la seconde liste comprend l'identifiant d'état supprimé du premier utilisateur.

6. Serveur de réseau (20), appliqué à un système de réseau privé virtuel, comprenant :
une unité de réception (201) configurée pour recevoir un premier paquet envoyé par un dispositif d'accès, dans lequel le premier paquet comprend un identifiant d'un premier utilisateur, et l'identifiant du premier utilisateur est utilisé pour identifier le premier utilisateur ;
une unité de recherche (202), configurée pour rechercher dans une première liste déjà stockée un identifiant d'état supprimé du premier utilisateur en fonction de l'identifiant du premier utilisateur reçu par l'unité de réception ;
une unité de suppression (203) configurée pour rejeter le premier paquet lorsque la première liste dans laquelle l'unité de recherche effectue la recherche comprend l'identifiant d'état supprimé du premier utilisateur, dans lequel l'identifiant d'état supprimé du premier utilisateur est utilisé pour indiquer de ne pas fournir de services au premier utilisateur ; et
une unité d'envoi (204), configurée pour envoyer un second paquet au dispositif d'accès lorsque la première liste comprend l'identifiant d'état supprimé du premier utilisateur, dans lequel le second paquet comprend l'identifiant d'état supprimé du premier utilisateur, de sorte que le dispositif d'accès cesse de fournir des services au premier utilisateur en fonction de l'identifiant d'état supprimé du premier utilisateur.

7. Serveur de réseau (20) selon la revendication 6, dans lequel
l'unité de suppression (203) est en outre configurée pour : enregistrer une heure d'apparition d'une première faute du premier utilisateur et accumuler un nombre d'apparitions de fautes, dans lequel le nombre d'apparitions de fautes est au moins un parmi un nombre de fois où le premier utilisateur ne parvient pas à se connecter au serveur du réseau et un nombre de fois où le premier utilisateur s'est déconnecté du serveur du réseau, ou le nombre d'apparitions de fautes est une somme d'un nombre de fois où le premier utilisateur ne parvient pas à se connecter au serveur du réseau et d'un nombre de fois où le premier utilisateur s'est déconnecté du serveur du réseau ; stocker l'identifiant d'état supprimé du premier utilisateur dans la première liste lorsque le nombre d'apparitions de fautes du premier utilisateur pendant la première durée est supérieur ou égal à un premier seuil ; et effacer le nombre d'apparitions de fautes du premier utilisateur après qu'un certain laps de temps, à partir du moment de l'apparition de la première faute, d'accumulation du nombre d'apparitions de fautes par le serveur du réseau atteint la première durée.

8. Serveur de réseau (20) selon la revendication 6 ou 7, dans lequel
l'unité de suppression (203) est en outre configurée pour supprimer l'identifiant d'état supprimé du premier utilisateur de la première liste après qu'un certain laps de temps pendant laquelle le serveur du réseau stocke l'identifiant d'état supprimé du premier utilisateur dans la première liste atteint une seconde durée.

9. Procédé de traitement de paquets, appliqué à un système de réseau privé virtuel, comprenant les étapes consistant à :
recevoir (401), par un serveur du réseau, un premier paquet envoyé par un dispositif d'accès, dans lequel le premier paquet comprend un identifiant d'un premier utilisateur, et l'identifiant du premier utilisateur est utilisé pour identifier le premier utilisateur ;
rechercher (402), par le serveur du réseau, dans une première liste déjà stockée un identifiant d'état supprimé du premier utilisateur en fonction de l'identifiant du premier utilisateur ;
rejeter (403), par le serveur du réseau, le premier paquet lorsque la première liste comprend l'identifiant d'état supprimé du premier utilisateur, dans lequel l'identifiant d'état supprimé du premier utilisateur est utilisé pour indiquer de ne pas fournir de services au premier utilisateur ; et
envoyer, par le serveur du réseau, un second paquet au dispositif d'accès lorsque la première liste comprend l'identifiant d'état supprimé du premier utilisateur, dans lequel le second paquet comprend l'identifiant d'état supprimé du premier utilisateur, de sorte que le dispositif d'accès cesse de fournir des services au premier utilisateur en fonction de l'identifiant d'état supprimé du premier utilisateur.

10. Procédé selon la revendication 9, dans lequel le procédé comprend en outre les étapes consistant à :
enregistrer, par le serveur du réseau, un instant d'apparition d'une première faute du premier utilisateur, et accumuler un nombre d'apparitions de fautes, dans lequel le nombre d'apparitions de fautes est au moins un parmi un nombre de fois où le premier utilisateur ne parvient pas à se connecter au serveur du réseau et un nombre de fois où le premier utilisateur s'est déconnecté du serveur du réseau, ou le nombre d'apparitions de fautes est une somme d'un nombre de fois où le premier utilisateur ne parvient pas à se connecter au serveur du réseau et d'un nombre de fois où le premier utilisateur s'est déconnecté du serveur du réseau ;
stocker, par le serveur du réseau, l'identifiant d'état supprimé du premier utilisateur dans la première liste lorsque le nombre d'apparitions de fautes du premier utilisateur pendant la première durée est supérieur ou égal à un premier seuil ; et
effacer le nombre d'apparitions de fautes du premier utilisateur après qu'un certain laps de temps, à partir du moment de l'apparition de la première faute, d'accumulation du nombre d'apparitions de fautes par le serveur du réseau atteint la première durée.

11. Procédé selon la revendication 9, dans lequel le procédé comprend en outre l'étape consistant à :
supprimer, par le serveur du réseau, l'identifiant d'état supprimé du premier utilisateur de la première liste après qu'un certain laps de temps pendant laquelle le serveur du réseau stocke l'identifiant d'état supprimé du premier utilisateur dans la première liste atteint une seconde durée.
